# EUROPEAN PATENT APPLICATION

(11) **EP 4 306 457 A1**
(43) Date of publication of application: **17.01.2024**
(21) Application number: 22766388.7
(22) Date of filing: 11.03.2022
(51) Int. Cl.: B65G 29/00, B65G 47/84, B65G 47/22, B65G 37/00, B21D 51/38, B21D 43/14

(54) **DEVICE FOR HIGH-SPEED NECK FORMING OF RING-PULL CAN BY MEANS OF MULTI-CHANNEL FEEDING**

(30) Priority: 12.03.2021 CN 202110271926
(71) Applicant: Suzhou Slac Precision Equipment Co. Ltd., Suzhou, Jiangsu 215000 (CN)
(72) Inventor: AN, Shu, Suzhou, Jiangsu 215000 (CN); NIU, Yunhua, Suzhou, Jiangsu 215000 (CN); WANG, Yang, Suzhou, Jiangsu 215000 (CN)
(74) Representative: Betten & Resch
(86) International application number: PCT/CN2022/080377
(87) International publication number: WO 2022/188866

(57) **Abstract**

A kind of equipment for high-speed neck forming of cans through multi-channel feeding includes a can entry station and multiple sets of neck forming stations; a can entry station comprises at least two sets of can entry channels and a loading transfer turntable; each set of can entry channel comprises a feeding turntable and a feeding transfer turntable; the feeding turntable corresponds to a loading channel setting, and the number of loading channels is the same as the number of can entry channels; several vacuum adsorption grooves are distributed on circumferential surface of the feeding turntable; several vacuum adsorption grooves are distributed on circumferential surface of the feeding transfer turntable; when the feeding turntable and the feeding transfer turntable rotate to feed, two corresponding vacuum adsorption grooves on both parties are jointly to form a circular junction; the can body enters the vacuum adsorption groove of feeding transfer turntable through the junction from the vacuum adsorption groove of feeding turntable; the loading transfer turntable is located at the rear of each feeding transfer turntable, and the feeding transfer turntable of each can entry channel feeds alternately to the loading transfer turntable The present invention can greatly increase production speed or reduce the speed requirements of the original mechanism of the equipment, and ensure the stability of the can when entering the mold.

## Description

### Field

The present invention relates to the field of processing equipment for cans, in particular to a kind of equipment for high-speed neck forming of cans through multi-channel feeding.

### Background Art

With the development of social economy, the market has increasingly high requirements for production speed and stability of equipment in the manufacturing industry. The multi-stop neck forming equipment used in production process of cans in the metal packaging industry is now widely required in the market to achieve a production speed of 3000CPM+(CPM, i.e. can per minute), or even 3400CPM+. Therefore, stable high-speed production is the key to fierce market competition.

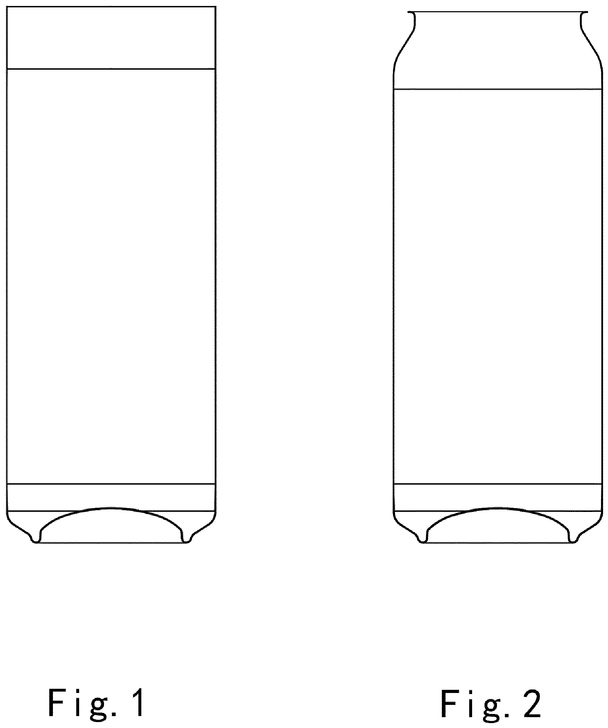

The production of cans requires multiple processes, including cupping, stretching, edge-cutting, color printing, internal spraying, and neck forming. Figure 1 shows a cut-edged can, and Figure 2 shows a can after neck forming. The stretching machine used in the stretching process and the internal spraying machine used in the internal spraying process can increase the production speed by increasing the number of configured equipment. However, the equipment used in the neck forming process has a high cost and covers a large area. Therefore, simply increasing the number to improve the production speed will lead to a significant increase in cost and occupy more land.

At the same time, the can bodies are transmitted through pipelines between multiple processes of can production. Ultra-high-speed production has high requirements for pipeline design. If pipeline transmission is not smooth, the equipment will not be able to run at high speed.

In addition, can bodies need mineral oil or hot wax to lubricate mouth part of the can before entering the neck forming equipment for multi-pass forming. If a non-contact lubrication system is used, the speed of the lubrication system (rated design speed is 3000CPM) is now also the bottleneck restricting the speed of the equipment.

In summary, how to solve the problem of high-speed production without changing the existing neck forming equipment becomes the topic to be studied and solved by the invention.

### Summary of the invention

The purpose of the present invention is to provide a kind of equipment for high-speed neck forming of a can through multi-channel feeding.

To achieve the above purpose, the technical solution adopted by the present invention is:
A kind of equipment for high-speed neck forming of cans through multi-channel feeding, wherein:
   including a can entry station and multiple sets of neck forming stations from front to back according to processing sequence of can;
   a can entry station includes at least two sets of can entry channels and a loading transfer turntable;
   Each set of can entry channel includes a feeding turntable and a feeding transfer turntable; The feeding turntable corresponds to a loading channel setting, and the number of loading channels is the same as the number of can entry channels; the loading channel is used to transport cans to be neck formed to the feeding turntable;
   The feeding turntable is a star wheel, on circumferential surface of which several vacuum adsorption grooves are distributed, and the vacuum adsorption groove is in an arc shape, which is used for adsorption and positioning can body;
   The feeding transfer turntable is located at the rear of feeding turntable, and the rotation shaft of feeding transfer turntable is parallel to the rotation shaft of feeding turntable; the feeding transfer turntable is a star wheel, on circumferential surface of which several vacuum adsorption grooves are distributed; when the feeding turntable and the feeding transfer turntable rotate to feed, two corresponding vacuum adsorption grooves on both parties are joint to form a circular junction; the can body enters the vacuum adsorption groove of feeding transfer turntable through the junction from the vacuum adsorption groove of feeding turntable;
   the loading transfer turntable is located at the rear of each feeding transfer turntable, and the feeding transfer turntable of each can entry channel feeds alternately to the loading transfer turntable .

The relevant content in the above technical solution is explained as follows:
1. In above solution, the rotation shaft of loading transfer turntable is parallel to the rotation shaft of the feeding turntable; The loading transfer turntable is a star wheel, on circumferential surface of which several vacuum adsorption grooves are distributed; when the feeding transfer turntable and the loading transfer turntable rotate to feed, two corresponding vacuum adsorption grooves on both parties are joint to form a circular junction; the can body enters the vacuum adsorption groove of loading transfer turntable through the junction from the vacuum adsorption groove of feeding transfer turntable.
2. In above solution, the neck forming station includes a spindle assembly and a transfer assembly; the spindle assembly includes a forming spindle turntable, and the transfer assembly includes a forming transfer turntable; The rotation shafts of forming spindle turntable and forming transfer turntable are parallel to the rotation shafts of loading transfer turntable; the forming spindle turntable and the forming transfer turntable are both star wheels; several positioning slots are evenly distributed on circumferential surface of forming spindle turntable, and the positioning slots are in a circular arc shape, used for positioning can body of can; several vacuum adsorption grooves are arranged on circular surface of forming transfer turntable; when the loading transfer turntable and the forming spindle turntable rotate to receive material, the vacuum adsorption groove on the former and the positioning slot on the latter are joint to form a transfer position, and the can body enters the positioning slot of forming spindle turntable through the transfer position from the vacuum adsorption groove of loading transfer turntable; when the forming spindle turntable and the forming transfer turntable rotate to receive material, the positioning slot on the former and the vacuum adsorption groove on the latter are joint to form a transfer position, and the can body enters the vacuum adsorption groove of forming transfer turntable through the transfer position from the positioning slot of forming spindle turntable.
   The neck forming stations are connected before and after each other, processing the neck molding of the can body in steps, and the finished product is discharged at the last station.
3. In above solution, the spindle assembly of neck forming station further includes multiple sets of mold components and multiple sets of push plate components;
   The mold components and the pusher plate components are arranged one by one in correspondence, and the two are arranged on both sides of can body along a height direction of can body.
   During processing, the can body is pushed towards the mold components by execution component push plate in the push plate component, and the neck of the can body is formed through the execution component mold of the latter.

Due to the fact that the construction of the neck forming station may adopt existing technology and is not the point of invention in this application, so its principle and details will not be elaborated in detail.

The working principle and advantages of the present invention are as follows:
The present invention relates to a kind of equipment for high-speed neck forming of cans through multi-channel feeding, including a can entry station and multiple sets of neck forming stations;
The can entry station includes at least two sets of can entry channels and a loading transfer turntable;
Each set of can entry channel includes a feeding turntable and a feeding transfer turntable; The feeding turntable corresponds to a loading channel setting, and the number of loading channels is the same as the number of can entry channels; There are several vacuum adsorption grooves uniformly distributed on the feed turntable, and several vacuum adsorption grooves uniformly distributed on the feeding transfer turntable; when the feeding turntable and the feeding transfer turntable rotate to feed, two corresponding vacuum adsorption grooves on both parties are joint to form a circular junction; the can body enters the feeding transfer turntable through the junction from the feeding turntable; the loading transfer turntable is located at the rear of each feeding transfer turntable, and the feeding transfer turntable feeds alternately to the loading transfer turntable .

Compared to existing technologies, the present invention designs a kind of equipment that utilizes a multi-groove turntable to achieve multi-channel high-speed feeding, suitable for situations where the equipment needs ultra-high-speed production.

The present invention reduces the speed requirements for the conveying mechanism and the feeding pre-treatment mechanism, that is, the existing mechanism for pre-treatment of materials on the conveying mechanism can still be used. That is to say, if designed as a dual channel feeding system, the speed of the conveying and pre-treatment mechanisms can be reduced to half of the original speed for the same production speed requirements.

In addition, by increasing the number of junctions, every time the can body enters the junction, it can undergo a stable calibration of the position, thereby increasing the stability time of the can body and ultimately ensuring that the position of the can body is stable enough to avoid shaking when entering the neck forming station. That is, stable and reliable processing of neck forming can be achieved through multiple repositioning of the can body, with high can height and high speed.

In summary, the present invention can be directly modularized on existing equipment, greatly increasing production speed or reducing the speed requirements of the original mechanism of the equipment, and ensuring the stability of the can when entering the neck forming mold to meet high-speed production requirements.

### Description of figures

Figure 1 is a can after edge cutting;
Figure 2 is a can after neck forming;
Figure 3 is the structural schematic diagram one of the embodiment of the present invention (top view);
Figure 4 is the structural schematic diagram two of the embodiment of the present invention (front view);
Figure 5 is an enlarged view of point I in Figure 3;
Figure 6 is the structural schematic diagram one of prior art (top view);
Figure 7 is the structural schematic diagram two of prior art (front view).

In the above figures: 0. can body; 1. feeding turntable; 2. loading transfer turntable; 3. vacuum adsorption groove; 4. feeding transfer turntable; 4a. first junction; 4b. second junction; 5. loading channel; 7. forming spindle turntable; 8. forming transfer turntable; 9. positioning slot; 10. transfer position; 11. push plate; 12. mold; A. can entry station; B. neck forming station.

### Mode of carrying out the invention

The following is a further description of the present invention in conjunction with figures and embodiment.
Embodiment: The following will provide a clear explanation of the present application in terms of schematic and detailed descriptions. Those skilled in the art who understand the embodiment of the present application may modify it based on the techniques taught in the present application, which does not deviate from the spirit and scope of the present application.

The terms herein are intended only to describe specific embodiments and are not intended to be a limitation in this application Singular forms such as "a", "this", "the" and "that", as used here, also contain plural forms.

The words "first", "second" and so on used in this application are not intended to refer to order, nor to limit the application, but only to distinguish components or operations described in the same technical terms.

As for the "connection" or "positioning" used in this application, it may refer to two or more components or devices in direct physical contact with each other, or indirect physical contact with each other, and it may also refer to two or more components or devices in mutual operation or action.

The terms "including", "comprising", "having" and so on used in this application are all open terms, which means including but not limited to.

Unless otherwise specified, terms used in this application usually have the ordinary meaning of each word used in this field, in the content of this application and in the special content. Some terms used to describe this application will be discussed below or elsewhere in this specification to provide additional guidance for those skilled in the art on the description of this application.

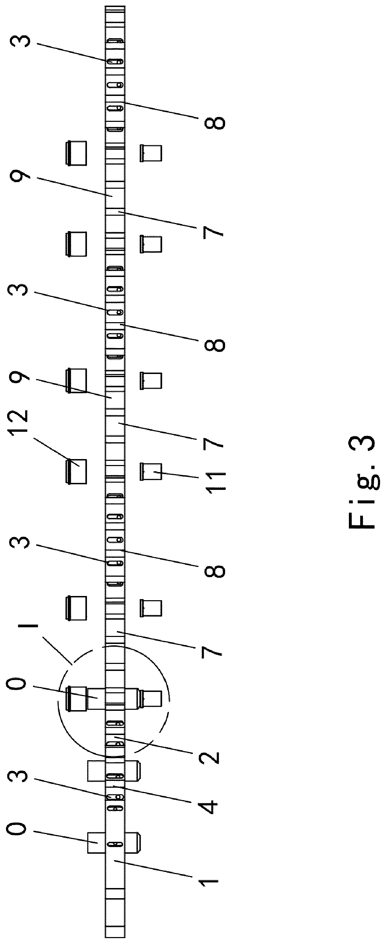

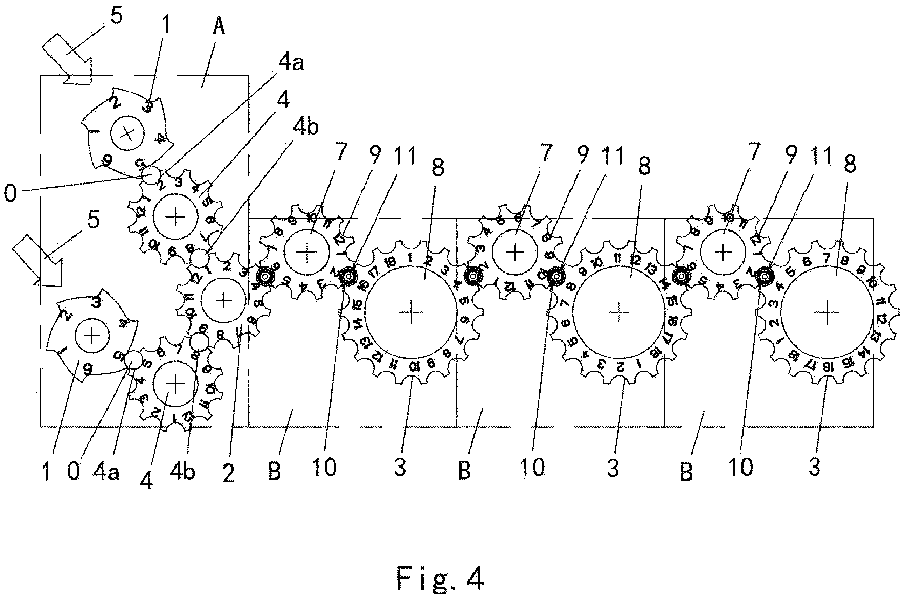

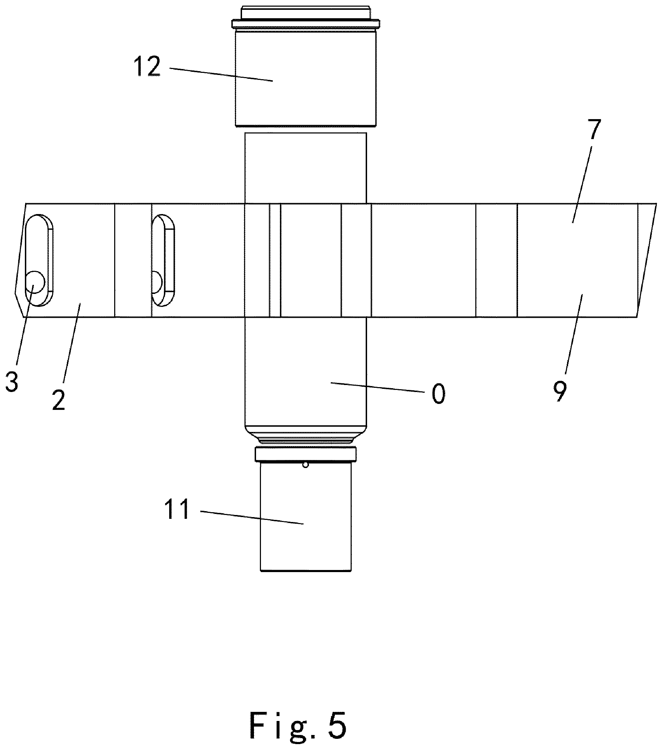

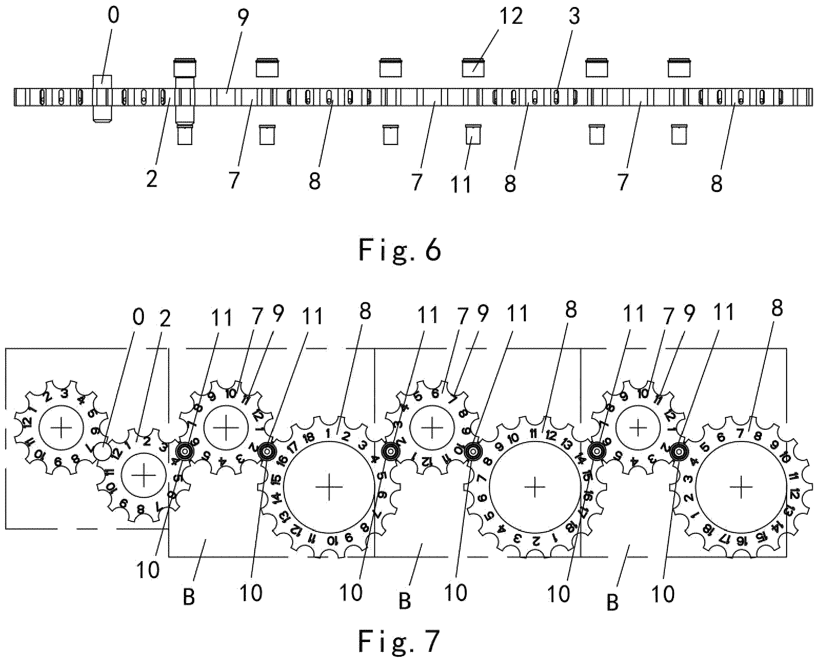

See figures 3-7, a kind of equipment for high-speed neck forming of cans through multi-channel feeding, includes a can entry station A and multiple sets of neck forming stations B from front to back according to processing sequence of can;

A can entry station A includes at least two sets of can entry channels and a loading transfer turntable 2.

Each set of can entry channel includes a feeding turntable 1 and a feeding transfer turntable 4; The feeding turntable 1 corresponds to a loading channel 5 setting, and the number of loading channels 5 is the same as the number of can entry channels; the loading channel 5 is used to transport cans to be neck formed to the feeding turntable 1.

The feeding turntable 1 is a star wheel, on circumferential surface of which several vacuum adsorption grooves 3 are distributed, and the vacuum adsorption groove 3 is in an arc shape, which is used for adsorption and positioning can body 0;

The feeding transfer turntable 4 is located at the rear of feeding turntable 1, and the rotation shaft of feeding transfer turntable 4 is parallel to the rotation shaft of feeding turntable 1; the feeding transfer turntable 4 is a star wheel, on circumferential surface of which several vacuum adsorption grooves 3 are distributed; when the feeding turntable 1 and the feeding transfer turntable 4 rotate to feed, two corresponding vacuum adsorption grooves 3 on both parties are joint to form a first junction 4a; the can body 0 enters the vacuum adsorption groove 3 of feeding transfer turntable 4 through the first junction 4a from the vacuum adsorption groove 3 of feeding turntable 1.

The loading transfer turntable 2 is located at the rear of each feeding transfer turntable 4, and the feeding transfer turntable 4 of each can entry channel feeds alternately to the loading transfer turntable 2.

The rotation shaft of loading transfer turntable 2 is parallel to the rotation shaft of the feeding turntable 1; The loading transfer turntable 2 is a star wheel, on circumferential surface of which several vacuum adsorption grooves 3 are distributed; when the feeding transfer turntable 4 and the loading transfer turntable 2 rotate to feed, two corresponding vacuum adsorption grooves 3 on both parties are joint to form a second junction 4b; the can body 0 enters the vacuum adsorption groove 3 of loading transfer turntable 2 through the second junction 4b from the vacuum adsorption groove 3 of feeding transfer turntable 4.

The neck forming station B includes a spindle assembly and a transfer assembly; the spindle assembly includes a forming spindle turntable 7, and the transfer assembly includes a forming transfer turntable 8.

The rotation shafts of forming spindle turntable 7 and forming transfer turntable 8 are parallel to the rotation shaft of loading transfer turntable 2; the forming spindle turntable 7 and the forming transfer turntable 8 are both star wheels; several positioning slots 9 are evenly distributed on circumferential surface of forming spindle turntable 7, and the positioning slots 9 are in a circular arc shape (semicircle is preferred), used for positioning can body 0 of can; several vacuum adsorption grooves 3 are arranged on circular surface of forming transfer turntable 3.
when the loading transfer turntable 2 and the forming spindle turntable 7 rotate to receive material, the vacuum adsorption groove 3 on the former and the positioning slot 9 on the latter are joint to form a transfer position 10, and the can body 0 enters the positioning slot 9 of forming spindle turntable 7 through the transfer position 10 from the vacuum adsorption groove 3 of loading transfer turntable 2.
when the forming spindle turntable 7 and the forming transfer turntable 8 rotate to receive material, the positioning slot 9 on the former and the vacuum adsorption groove 3 on the latter are joint to form a transfer position 10, and the can body 0 enters the vacuum adsorption groove 3 of forming transfer turntable 8 through the transfer position 10 from the positioning slot 9 of forming spindle turntable 7.

The spindle assembly of neck forming station B further includes multiple sets (usually 12 sets) of mold components and multiple sets (usually 12 sets) of push plate components; The mold components and the pusher plate components are arranged one by one in correspondence, and the two are arranged on both sides of can body 0 along a height direction of can body 0. During processing, the can body 0 is pushed towards the mold components by execution component push plate 11 in the push plate component, and the neck of the can body 0 is formed through the execution component mold 12 of the latter.

The neck forming stations B are connected back and forth to complete the neck forming of can body 0 step by step, and the finished product is discharged at the last station. Since the structure of neck forming station B may adopt the existing technology and is not the invention point of this application, the principle and details of this application will not be described in detail.

The structure of the feeding transfer turntable 2 may be the same as that of the forming transfer turntable 8.

To sum up, the invention can directly carry out modular transformation on the existing equipment, multiple increase the production speed or reduce the speed requirements of the original mechanism of the equipment, and meet the requirements of high-speed production by ensuring the stability of the can when entering the neck forming mold.

The above embodiment is only for the purpose of explaining the technical concept and features of the invention, and its purpose is to enable those familiar with the technology to understand the content of the invention and implement it, and cannot limit the protection scope of the invention. Any equivalent change or modification made according to the spirit of the invention shall be covered by the protection scope of the invention.

## Claims

1. A kind of equipment for high-speed neck forming of cans through multi-channel feeding, wherein comprises a can entry station and multiple sets of neck forming stations from front to back according to processing sequence of can;
A can entry station comprises at least two sets of can entry channels and a loading transfer turntable;
Each set of can entry channel comprises a feeding turntable and a feeding transfer turntable; The feeding turntable corresponds to a loading channel setting, and the number of loading channels is the same as the number of can entry channels; the loading channel is used to transport cans to be neck formed to the feeding turntable;
The feeding turntable is a star wheel, on circumferential surface of which several vacuum adsorption grooves are distributed, and the vacuum adsorption groove is in an arc shape, which is used for adsorption and positioning can body;
The feeding transfer turntable is located at the rear of feeding turntable, and the rotation shaft of feeding transfer turntable is parallel to the rotation shaft of feeding turntable; the feeding transfer turntable is a star wheel, on circumferential surface of which several vacuum adsorption grooves are distributed; when the feeding turntable and the feeding transfer turntable rotate to feed, two corresponding vacuum adsorption grooves on both parties are joint to form a circular junction; the can body enters the vacuum adsorption groove of feeding transfer turntable through the junction from the vacuum adsorption groove of feeding turntable;
the loading transfer turntable is located at the rear of each feeding transfer turntable, and the feeding transfer turntable of each can entry channel feeds alternately to the loading transfer turntable .

2. The equipment for high-speed neck forming according to claim 1, wherein: The rotation shaft of loading transfer turntable is parallel to the rotation shaft of the feeding turntable; The loading transfer turntable is a star wheel, on circumferential surface of which several vacuum adsorption grooves are distributed; when the feeding transfer turntable and the loading transfer turntable rotate to feed, two corresponding vacuum adsorption grooves on both parties are joint to form a circular junction; the can body enters the vacuum adsorption groove of loading transfer turntable through the junction from the vacuum adsorption groove of feeding transfer turntable.

3. The equipment for high-speed neck forming according to claim 1, wherein: The neck forming station comprises a spindle assembly and a transfer assembly; the spindle assembly comprises a forming spindle turntable, and the transfer assembly comprises a forming transfer turntable;
The rotation shafts of forming spindle turntable and forming transfer turntable are parallel to the rotation shaft of loading transfer turntable; the forming spindle turntable and the forming transfer turntable are both star wheels; several positioning slots are evenly distributed on circumferential surface of forming spindle turntable, and the positioning slots are in a circular arc shape, used for positioning can body of can; several vacuum adsorption grooves are arranged on circular surface of forming transfer turntable;
when the loading transfer turntable and the forming spindle turntable rotate to receive material, the vacuum adsorption groove on the former and the positioning slot on the latter are joint to form a transfer position, and the can body enters the positioning slot of forming spindle turntable through the transfer position from the vacuum adsorption groove of loading transfer turntable;
when the forming spindle turntable and the forming transfer turntable rotate to receive material, the positioning slot on the former and the vacuum adsorption groove on the latter are joint to form a transfer position, and the can body enters the vacuum adsorption groove of forming transfer turntable through the transfer position from the positioning slot of forming spindle turntable.

4. The equipment for high-speed neck forming according to claim 3, wherein: the spindle assembly of neck forming station further comprises multiple sets of mold components and multiple sets of push plate components;
The mold components and the pusher plate components are arranged one by one in correspondence, and the two are arranged on both sides of can body along a height direction of can body.
